Europäisches Patentamt

European Patent Office

Office européen des brevets

(19)

(11) Publication number: **0 203 037**
**B1**

(12) **EUROPEAN PATENT SPECIFICATION**

(45) Date of publication of patent specification: **08.02.89**

(21) Application number: **86830114.4**

(22) Date of filing: **08.05.86**

(51) Int. Cl.⁴: **G 02 C 3/04**

(54) **A lorgnette frame.**

(30) Priority: **14.05.85 IT 2068785**

(43) Date of publication of application:
**26.11.86 Bulletin 86/48**

(45) Publication of the grant of the patent:
**08.02.89 Bulletin 89/06**

(84) Designated Contracting States:
**AT BE CH DE FR GB LI NL**

(56) References cited:
**FR-A-2 267 562**
**GB-A- 303 730**
**GB-A- 952 747**

(73) Proprietor: **SAFILO S.p.A.**
**I-32044 Pieve di Cadore (Belluno) (IT)**

(72) Inventor: **Tabacchi, Vittorio**
**P.zza Tiziano, 7**
**I-32044 Pieve Di Cadore (Belluno) (IT)**

(74) Representative: **Perani, Aurelio et al**
**c/o JACOBACCI-CASETTA & PERANI S.N.C. Via**
**Visconti di Modrone 7**
**I-20122 Milano (IT)**

EP 0 203 037 B1

Courier Press, Leamington Spa, England.

## Description

This invention relates to a frame for eyeglasses of the type commonly referred to as "lorgnette" and comprising a lens holder subframe and a case connected thereto.

Lorgnettes are vision corrective instruments generally used, instead of ordinary spectacles, by persons who only make occasional use of them.

They differ from traditional spectacles or eyeglasses with legs fitting behind one's ears in that the frame legs are replaced with a handle attached to one side only of the lens holder subframe.

In view of their intended application, characterized by sporadic use, and comparatively frail construction, lorgnettes require a protective case wherein they can be kept when not actually in use.

Some typical cases, and their related lorgnettes, are disclosed in UK Patent No. 952,747 and published French Patent No. 2,267,562.

The UK Patent mentioned above is concerned with lorgnettes having a folding lens holder subframe which is mounted to a box type of case.

The case of this disclosure is intended for attachment to the user's wrist by means of a strap.

The lorgnette eyeglasses are used by raising the wrist to eye level. Of course, that position can only be maintained for a short time, and is tiring.

French Patent No. 2,267,562 discloses lorgnette eyeglasses having a plate-like lens holder subframe of massive construction and a pliable, bag-like case.

The lens holder subframe construction is rigid and heavy, and lacks an over-the-nose fitting between the lens bezels and a handle.

The case only purports to keep the lenses protected against scuffing.

In order to use the lorgnettes, users are expected to hold the lens holder subframe by an edge portion thereof at eye level.

Owing to that subframe incorporating no nose fitting and adequate handle, the operation is inconvenient and tiring. Further, the subframe is not effectively protected against shock and distortion while in the case.

The problem underlying this invention is that of providing a lorgnette frame which can obviate all of the above-discussed prior disadvantages, and in particular one which incorporates a well protected lens holder subframe when the lorgnette eyeglasses are put back which can be held comfortably when the lorgnette eyeglasses are in use.

This problem is solved according to the invention by a frame for eyeglasses of the aforesaid type, which is characterized in that said case is of a rigid box-type construction, and that said subframe is guided slidingly therein between an extended first position in which said case serves as a handle and a second position in which said handle forms a case containing said subframe.

The features and advantages of the invention will be more clearly understood from the following detailed description of a preferred though not exclusive embodiment thereof, to be taken in conjunction with the accompanying illustrative and not limitative drawings, where:

Figure 1 is a perspective view of a lorgnette according to the invention, shown in its operating condition;

Figure 2 is a perspective view of the lorgnette of Figure 1, shown in its collapsed condition within its case, the latter being shown in phantom lines;

Figure 3 is a longitudinal section view of the lorgnette shown in the preceding figures; and

Figures 4 and 5 are sectional views taken along the lines IV—IV and V—V, respectively, in Figure 3.

Throughout the drawing figures, the reference numeral 1 designates generally a lorgnette eyeglasses frame having a lens holder subframe 2 and a rigid, rod-like handle 3.

The handle 3 is of box-like configuration in the form of an elongation parallelepipedon open at one end.

Two juxtaposed projections 5a, 5b are provided on its interior which confront each other and extend longitudinally close and parallel to a wall 3a of same.

The projections 5a, 5b divide the handle 3 interior into two compartments 6 and 7, respectively bounded by the wall 3a and the wall opposite to it, indicated at 3b.

The frame 2 comprises an elongate beam 8 formed by two portions 8a, 8b which are aligned axially in continuation of each other, a respective lens bezel, 9a, 9b, being mounted to each said portion.

The portion 8a is of tubular construction with a square cross-sectional shape, and a longitudinally extending slot 10 is formed through a wall thereof.

The portion 8b is provided with a lug 11 which extends in an axial direction and fits telescopically into the portion 8a. On the free end of the lug 11, there is formed an elevation 12 in sliding engagement within the slot 10 and adapted to function as a travel end stop to prevent the two portions 8a, 8b of the beam 8 from sliding off each other.

A coil spring 13 extends inside the portion 8a between a peg 14 and the free end of the lug 11. The spring 13 is effective to constantly bias the portions 8a, 8b away from each other.

At opposed ends of the beam 8, there are attached respectively to the portions 8a, 8b an L-like bracket 15 and a small plate 16 set at right angles thereto.

The bracket 15 has a long side 15a close against its corresponding bezel 9a.

The plate 16 is butt welded to the free end of the portion 8b, also set close against the bezel 9b.

It has a substantially frusto-conical back 16a effective to form a closing wall at the open end of the handle 3, as explained hereinafter.

The plate 16 portion lying close against the bezel 9 is configured as a block 16b through-penetrated by a hole 18 having its axis perpendicular to the plane of the subframe 2.

The hole 18 forms a seat for the snap-action closure device 19 of the lorgnette 1.

The device 19 comprises two small balls 20 biased by a spring 21 against a respective chamfered end rim of the aforesaid hole 18.

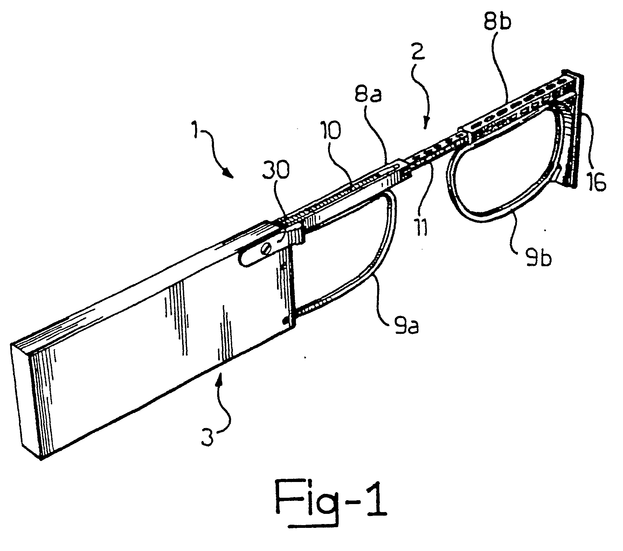

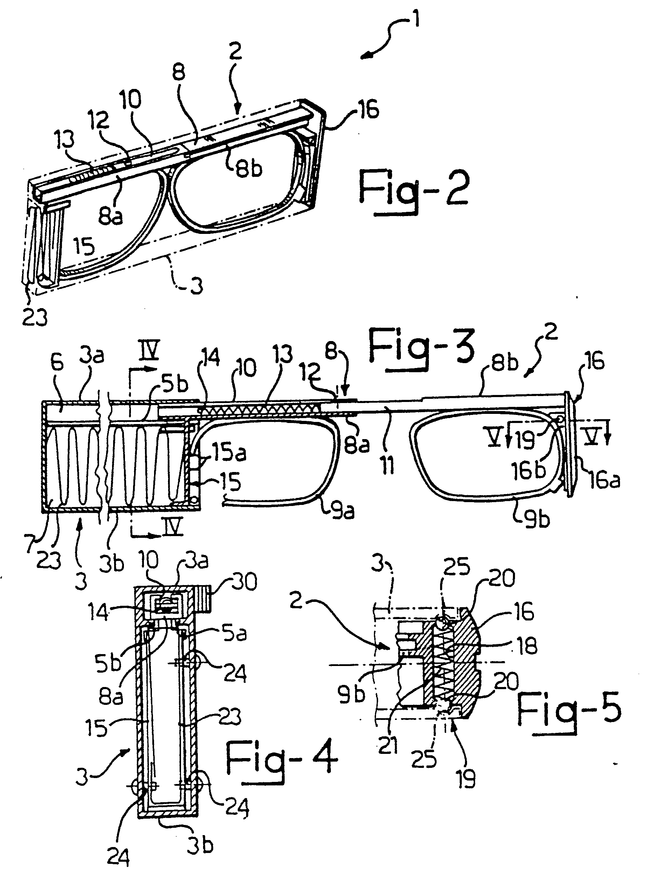

The frame 2 is guided slidingly within the handle 3 between a first position extended therefrom (Figure 1) and a second position whereat it fits entirely therein (Figure 2). It is in that second position that the handle 3 will form a case for the subframe 2.

The beam 8 is slidable within the compartment 6 which forms a guiding runway therefor. The bezels 9a, 9b fit, in turn, inside the compartment 7 with the subframe 2 in the second position.

A reed spring 23 is provided in said compartment 7 which acts against the bracket 15 to urge the subframe toward the extended position of the handle 3. In that first position, the long side 15a of the bracket 15 abuts on plural pins 24 set in the handle 3 in the proximity of its open end and protruding into the compartment 7; the beam 8 is extended telescopically by the spring 13, with the portions 8a, 8b at their maximum distance apart. The same would apply to the bezels 9a, 9b which, when so held apart, can straddle the user's nose.

With the subframe 2 in the second position, i.e. received into the handle 3, the block 16b fits into the entry to the compartment 7. The balls 20 of the snap-action closure device 19 for the lorgnette 1 engage in corresponding recesses 25 formed at the open end of the handle 3, in opposing walls of the compartment 7.

In this condiiton, the plate 16 forms a close-off wall for the open end of said handle 3.

To use the lorgnette 1, it will be sufficient to slightly push the plate 16 away from the handle 3, thus disengaging the balls 20 from the recesses 25.

In the example shown, this is accomplished by providing a pushbutton 30 secured slidingly to the handle 3 proximate its open end.

On moving the pushbutton 30 forward toward the plate 16, it will be caused to interfere with the back 16b thereof, thus releasing the device 19.

Further extension of the subframe 2 is brought about by the spring 23, until the bracket 15 stops against the pins 24.

When the lorgnette is no longer needed, the subframe 2 is pushed back into the handle 3 far enough to permit the balls 20 of the device 19 to become engaged in the recesses 25. The lug 11 on the portion 8b of the beam 8 will telescope into the portion 8a, thereby the bezels 9a, 9b are brought together.

The lorgnette frame of the invention affords a number of advantages, among which reduced overall size with the subframe 2 housed inside the handle 3, and a highly effective protection by the handle 3 serving as a case for the subframe 2.

Furthermore, discomfort for the user of a lorgnette according to the invention is minimized by the comfortable grip afforded by the handle 3 and the slim design and light weight of the structure as a whole.

## Claims

1. A lorgnette frame comprising a lens holder subframe (2) and a case (3) connected thereto, characterized in that said case (3) is of a rigid box-type construction, and that said subframe (2) is guided slidingly therein between an extended first position in which said case (3) serves as a handle and a second position in which said handle (3) forms a case containing said subframe (2).

2. A frame according to Claim 1, characterized in that said handle (3) has on its interior a pair of confronting projections (5a, 5b) arranged to lie longitudinally parallel to and proximate to a wall (3a) thereof, said projections (5a, 5b) forming a guide for a carrier rod (8) of said subframe (2), said carrier rod (8) comprising two portions. (8a, 8b) each carrying a respective lens frame (9a, 9b) and being telescopically connected to each other and spring biased to a position corresponding to the pupilary distance.

3. A frame according to Claim 2, characterized in that it comprises a small plate (16) fastened to the free end of said carrier rod (8) and forming a lid of said case (3) if said subframe (2) is in said second position.

4. A frame according to claim 3, characterized in that it comprises a spring (23) acting between said handle (3) and said subframe (2) to bias the latter toward said first position, and a snap-action device (30) on said subframe (2) effective to hold it in said second position.

## Patentansprüche

1. Lorgnettefassung bestehend aus einem Linsen-Haltegestell (2) und einer damit verbundenen Hülle (3), dadurch gekennzeichnet, daß die Hülle (3) einen steifen kastenartigen Aufbau hat und daß das Haltegestell (2) in diesem gleitend verschieblich geführt ist und zwar zwischen einer ersten bzw. Auszugsstellung, in der die Hülle (3) als Handgriff dient und einer zweiten Stellung, in der der Handgriff (3) als Hülle das Haltegestell (2) in sich aufnimmt.

2. Fassung nach Anspruch 1, dadurch gekennzeichnet, daß der Handgriff (3) in seinem Inneren ein Paar einander gegenüberliegender Vorsprünge (5a, 5b) aufweist, die nahe einer Wand (3a) parallel und längs dieser angeordnet sind und eine Führung für einen Tragstab (8) des Haltegestells (2) bilden, welcher Tragstab (8) zwei Abschnitte (8a, 8b) aufweist, von denen jeder eine Linsenfassung (9a, 9b) trägt, wobei diese Abschnitte miteinander teleskopisch verbunden und im Sinne der Einnahme einer Stellung federbeaufschlagt sind, die dem Pupillenabstand entspricht.

3. Fassung nach Anspruch 2, dadurch gekennzeichnet, daß am freien Ende des Tragstabes (8) eine kleine Platte (16) befestigt ist, die einen in der zweiten Stellung des Haltegestells (2) das Gehäuse (3) verschließenden Deckel darstellt.

4. Fassung nach Anspruch 3, dadurch gekenn-

zeichnet, daß zwischen den Handgriff (3) und das Haltegestell (2) eine Feder (23) eingesetzt ist, die das Haltegestell in Richtung der ersten Stellung beaufschlagt, und daß ein Schnappverschluß (30) das Haltegestell (2) in der zweiten Stellung festhält.

**Revendications**

1. Monture de lorgnette comportant une monture auxiliaire porte-lentilles (2) et un boîtier (3) lié à cette monture auxiliaire, caractérisée en ce que ledit boîtier (3) est du type de construction en boîte rigide, et en ce que ladite monture auxiliaire (2) est guidée pour coulisser dans cette boîte en première position de sortie, dans lequel ledit boîtier (3) sert de pignée et une seconde position dans laquelle ladite poignée (3) forme un boîtier contenant ladite monture auxiliaire (2).

2. Monture selon la revendication 1, caractérisée en ce que ladite poignée (3) comporte à l'intérieur deux saillies opposées (5a, 5b) constituées pour être en direction longitudinale parallèles à une paroi (3a) de la poignée et proches de cette paroi, lesdites saillies (5a, 5b) formant un guidage pour une barre porteuse (8) de ladite monture auxiliaire (2), ladite barre porteuse (8) comportant deux parties (8a, 8b) qui portent chacune une monture de lentille respective (9a, 9b) et qui sont liées l'une à l'autre par un montage télescopique en étant sollicitées par ressort vers une position correspondant à la distance des pupilles.

3. Monture selon la revendication 2, caractérisée en ce qu'elle comporte une plaquette (16) fixée à l'extrémité libre de ladite barre porteuse (8) et formant un couvercle dudit boîtier (3) si ladite monture auxiliaire est dans ladite seconde position.

4. Monture selon la revendication 3, caractérisée en ce qu'elle comporte un ressort (23) agissant entre ladite poignée (3) et ladite monture auxiliaire (2) pour solliciter cette dernière vers ladite première position, et un dispositif d'encliquetage (30) sur ladite monture auxiliaire, ce dispositif agissant pour maintenir la monture dans ladite seconde position.

Fig-1

Fig-2

Fig-3

Fig-4

Fig-5